# EUROPÄISCHE PATENTSCHRIFT

(11) **EP 2 443 974 B1**
(45) Veröffentlichungstag und Bekanntmachung des Hinweises auf die Patenterteilung: **19.06.2019**
(21) Anmeldenummer: 11184763.8
(22) Anmeldetag: 12.10.2011
(51) Int. Cl.: A47J 36/02

(54) **Gargeschirrboden**
Cooking vessel bottom
Fond d'un récipient culinaire

(30) Priorität: 19.10.2010 ES 201031535
(43) Veröffentlichungstag der Anmeldung: 25.04.2012
(73) Patentinhaber: BSH Hausgeräte GmbH, 81739 München (DE)
(72) Erfinder: Acero Acero, Jesus, 50002 Zaragoza (ES); Alonso Esteban, Rafael, 22004 Huesca (ES); Barragan Perez, Luis Angel, 50018 Zaragoza (ES); Burdio Pinilla, José Miguel, 50018 Zaragoza (ES); Garcia Jimenez, Jose-Ramon, 50009 Zaragoza (ES); Llorente Gil, Sergio, 50009 Zaragoza (ES); Villuendas Yuste, Francisco, 50009 Zaragoza (ES)

(56) Entgegenhaltungen:
- EP-A2- 1 849 385
- WO-A1-2005/060802
- JP-A- 2007 130 310
- US-A1- 2007 292 706

## Beschreibung

Die Erfindung geht aus von einem Gargeschirrboden nach dem Oberbegriff des Anspruchs 1. Ein solcher Gargeschirrboden ist aus WO-A-2005/060802 bekannt.

Die Druckschrift JP 2007-130310 A offenbart ein irdenes Gargeschirr mit einem Gargeschirrboden, welcher eine metallhaltige Heizschicht mit einer Dicke zwischen 1 µm und 300 µm aufweist.

Die Aufgabe der Erfindung besteht insbesondere darin, einen gattungsgemäßen Gargeschirrboden mit einer verbesserten Energieeffizienz bei einer Erhitzung auf einem Induktionskochfeld bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Gargeschirrboden mit einem Schichtsystem, das zumindest eine Heizschicht mit einer elektrischen Leitfähigkeit von wenigstens 10⁴ S/m umfasst.

Es wird vorgeschlagen, dass eine Dicke der Heizschicht zwischen 5 µm und 20 µm liegt. Unter einem "Schichtsystem" soll insbesondere ein System mehrerer übereinander liegender Schichten verstanden werden. Unter einer "Schicht" soll insbesondere eine flache Anordnung zumindest eines Bauelements verstanden werden, welche zumindest eine erste Erstreckungslänge und eine zur ersten Erstreckungslänge senkrechte zweite Erstreckungslänge aufweist, welche zumindest 10-mal, insbesondere wenigstens 25-mal, vorzugsweise mindestens 50-mal und besonders vorteilhaft zumindest 100-mal kürzer ist als die erste Erstreckungslänge. Unter einer "Erstreckungslänge" eines Bauteils in einer Richtung soll insbesondere eine maximale Erstreckung einer senkrechten Projektion des Bauteils auf eine in die Richtung gerichtete Gerade verstanden werden. Unter einer "Dicke" einer Schicht soll insbesondere eine kürzeste Erstreckungslänge der Schicht verstanden werden. Unter einer "Heizschicht" soll insbesondere eine Schicht verstanden werden, die dazu vorgesehen ist, mittels eines Stromflusses, insbesondere eines Wirbelstromflusses, erwärmt zu werden. Unter "vorgesehen" soll insbesondere speziell ausgelegt und/oder ausgestattet verstanden werden. Vorzugsweise beträgt die elektrische Leitfähigkeit der Heizschicht zumindest 10⁵ S/m, insbesondere wenigstens 10⁶ S/m und besonders vorteilhaft mindestens 10⁷ S/m. Vorzugsweise ist die Heizschicht zumindest teilweise aus einem Metall, insbesondere Aluminium und/oder Kupfer und/oder Eisen, gebildet. Durch eine solche Ausgestaltung kann eine vorteilhaft höhere Energieeffizienz erreicht werden. Durch eine Dicke zwischen 5 µm und 20 µm kann ein besonders hoher Wirbelstromverlust in der Heizschicht während zumindest eines Betriebszustands bei einer gegebenen magnetischen Flussdichte erzielt werden, insbesondere wenn zur Heizschicht benachbart eine Magnetschicht existiert, die die magnetische Flussdichte innerhalb der Heizschicht erhöht. Des Weiteren kann sichergestellt werden, dass eine Skin-Tiefe für eine Wechselstromfrequenz zwischen 10 kHz und 100 kHz nicht überschritten wird, so dass die gesamte Dicke der Heizschicht für Wirbelströme zur Verfügung steht.

Ferner wird vorgeschlagen, dass die Heizschicht zumindest ein Material mit einer Wärmeleitfähigkeit von wenigstens 15 W/m/K, insbesondere von mindestens 50 W/m/K, vorzugsweise von zumindest 100 W/m/K und besonders vorteilhaft von wenigstens 200 W/m/K umfasst. Vorzugsweise ist die Heizschicht zumindest teilweise aus einem Metall mit einer entsprechend hohen Wärmeleitfähigkeit gebildet, insbesondere Aluminium und/oder Kupfer. Hierdurch kann eine in der Heizschicht erzeugte Wärme schnell zu ihrem Bestimmungsort abgeführt werden.

Erfindungsgemäß wird vorgeschlagen, dass das Schichtsystem zumindest eine Magnetschicht mit einer Permeabilitätszahl von wenigstens 10, insbesondere von mindestens 50, vorzugsweise von zumindest 100 und besonders vorteilhaft von wenigstens 500 umfasst. Vorzugsweise umfasst die Magnetschicht zumindest ein ferromagnetisches und/oder ferrimagnetisches Material. Hierdurch kann eine starke Erhöhung einer magnetischen Flussdichte an einem Ort, vorzugsweise am Ort der Heizschicht, erreicht werden. Des Weiteren kann eine Abschirmung von magnetischen Flusslinien erreicht werden.

Vorteilhaft weist die Magnetschicht zumindest in einem Teilbereich eine elektrische Leitfähigkeit von höchstens 10⁻⁴ S/m, insbesondere von maximal 10⁻⁵ S/m, vorteilhaft von höchstens 10⁻⁶ S/m und besonders vorteilhaft von maximal 10⁻⁷ S/m auf. Vorzugsweise besteht die Magnetschicht zumindest teilweise und besonders vorteilhaft vollständig aus einem Material mit einer entsprechend niedrigen elektrischen Leitfähigkeit, insbesondere einem Ferrit. Unter einem "Ferrit" soll insbesondere ein ferrimagnetischer keramischer Werkstoff verstanden werden, der vorzugsweise ein Metalloxid, insbesondere ein Eisenoxid, umfasst. Hierdurch können Wirbelstromverluste in der Magnetschicht wirkungsvoll minimiert werden.

In einer besonders bevorzugten Ausgestaltung der Erfindung wird vorgeschlagen, dass die Magnetschicht unmittelbar neben der Heizschicht angeordnet ist. Darunter, dass eine erste Schicht "unmittelbar neben" einer zweiten Schicht angeordnet ist, soll insbesondere verstanden werden, dass die erste Schicht und die zweite Schicht zumindest eine geometrische Kontaktfläche aufweisen, an der sich beide Schichten direkt berühren. Durch eine solche Ausgestaltung kann eine besonders starke Erhöhung einer magnetischen Flussdichte in der Heizschicht erreicht werden. Hierdurch können Wirbelstromverluste in der Heizschicht maximiert werden, wodurch eine besonders hohe Energieeffizienz erreicht werden kann. Insbesondere kann ein relativer Energieverlust in einer Elektronikeinheit und einer Induktorspule eines Induktionskochfelds minimiert werden.

Ferner wird vorgeschlagen, dass die Magnetschicht eine Dicke zwischen 10 µm und 4 mm, insbesondere zwischen 1 mm und 4 mm, aufweist. Hierdurch kann ein besonders energieeffizienter Kompromiss zwischen einer vorteilhaft starken Bündelung eines magnetischen Flusses sowie einem unvorteilhaft niedrigen Wärmestrom bei großer Dicke und einer unvorteilhaft schwächeren Bündelung des magnetischen Flusses sowie einem vorteilhaft höheren Wärmestrom bei kleiner Dicke erzielt werden.

Erfindungsgemäß wird vorgeschlagen, dass die Magnetschicht segmentiert ist und/oder zumindest eine Materialausnehmung aufweist. Darunter, dass die Magnetschicht "segmentiert" ist, soll insbesondere verstanden werden, dass die Magnetschicht zumindest zwei, vorzugsweise identische, Bauelemente aufweist. Besonders vorteilhaft liegen die zumindest zwei Bauelemente in einem montierten Zustand der Magnetschicht in einer zu einer kürzesten Erstreckungslänge der Magnetschicht senkrechten Ebene nebeneinander. Vorzugsweise ist die Segmentierung in Umfangsrichtung ausgeführt. Besonders vorteilhaft sind die Bauelemente in Form flacher Kreisscheibensegmente ausgeführt, die insbesondere in einem montierten Zustand zu einer Kreisscheibe zusammengefügt sind. Unter einer "Materialausnehmung" soll insbesondere ein Bereich der Magnetschicht verstanden werden, welcher frei von Material der Magnetschicht ist. Vorzugsweise ist eine maximale Erstreckungslänge der Materialausnehmung senkrecht zur kürzesten Erstreckungslänge der Magnetschicht. Hierdurch können Wirbelstromverluste weiter reduziert werden. Des Weiteren können Kosten eingespart werden, da insbesondere die Fertigung von kleinen Ferritelementen einfacher ist. Vorzugsweise umfasst die Materialausnehmung ein vom Material der Magnetschicht verschiedenes Material, insbesondere ein Material mit einer Wärmeleitfähigkeit von wenigstens 15 W/m/K, insbesondere von mindestens 50 W/m/K, vorzugsweise von zumindest 100 W/m/K und besonders vorteilhaft von wenigstens 200 W/m/K, insbesondere Aluminium und/oder Kupfer. Hierdurch kann ein durchschnittlicher Wärmestrom durch die Magnetschicht erhöht werden.

Ferner wird vorgeschlagen, dass das Schichtsystem neben der Heizschicht zumindest eine Wärmeleitschicht mit einer Wärmeleitfähigkeit von wenigstens 15 W/m/K, insbesondere von mindestens 50 W/m/K, vorzugsweise von zumindest 100 W/m/K und besonders vorteilhaft von wenigstens 200 W/m/K umfasst.

Vorzugsweise weist die Wärmeleitschicht eine möglichst große Querschnittsfläche senkrecht zu einer kürzesten Erstreckungslänge der Wärmeleitschicht und besonders vorteilhaft eine möglichst kleine Dicke auf. Hierdurch kann ein hoher Wärmestrom erzielt werden. Ferner kann eine gleichmäßige Wärmezufuhr zu einem Aufnahmebereich für Lebensmittel eines Gargeschirrs erreicht werden. Vorzugsweise weist die Wärmeleitschicht zumindest einen Fortsatz auf, der, vorzugsweise formschlüssig, in eine Ausnehmung der Magnetschicht eingreift. Hierdurch kann ein Wärmestrom von der Heizschicht durch die Magnetschicht zur Wärmeleitschicht vorteilhaft erhöht werden.

Besonders vorteilhaft ist die Wärmeleitschicht auf einer einem Aufnahmebereich für Lebensmittel zugewanden Seite der Heizschicht angeordnet. Unter einem "Aufnahmebereich für Lebensmittel" soll insbesondere ein Bereich verstanden werden, der zu einer Aufnahme eines Lebensmittels speziell vorgesehen ist. Vorzugsweise ist der Aufnahmebereich an einer Bodenfläche durch das Schichtsystem und an einer Seitenfläche durch eine Seitenwand des Gargeschirrs begrenzt. Hierdurch kann ein hoher Wärmestrom von der Heizschicht zum Aufnahmebereich erreicht werden. Wenn eine Oberfläche der Wärmeleitschicht zusätzlich eine Bodenfläche des Aufnahmebereichs bildet, kann besonders vorteilhaft ein hoher Wärmestrom von der Heizschicht zum Aufnahmebereich erreicht werden.

In einer bevorzugten Ausgestaltung der Erfindung wird vorgeschlagen, dass das Schichtsystem wenigstens eine Isolationsschicht mit einer Wärmeleitfähigkeit von höchstens 5 W/m/K, insbesondere von maximal 1 W/m/K, vorteilhaft von höchstens 0,1 W/m/K und besonders vorteilhaft von maximal 0,01 W/m/K umfasst. Unter einer "Isolationsschicht" soll insbesondere eine Schicht verstanden werden, die einen von der Heizschicht ausgehenden Wärmestrom minimiert. Vorzugsweise ist die Isolationsschicht zumindest teilweise aus einem Kunststoff, insbesondere PPS und/oder PA und/oder PBT, und/oder einem Gummi und/oder einer Glaskeramik gebildet. Hierdurch kann ein Wärmestrom in einer unerwünschten Richtung minimiert werden.

In einer besonders bevorzugten Ausgestaltung wird vorgeschlagen, dass die Isolationsschicht eine elektrische Leitfähigkeit von höchstens 1 S/m, insbesondere von maximal 10⁻² S/m, vorteilhaft von höchstens 10⁻⁴ S/m und besonders vorteilhaft von maximal 10⁻⁶ S/m umfasst. Hierdurch können Wirbelstromverluste in der Isolationsschicht minimiert werden.

Ferner wird vorgeschlagen, dass die Isolationsschicht auf einer einem Aufnahmebereich für Lebensmittel abgewandten Seite der Heizschicht angeordnet ist. Vorzugsweise ist die Isolationsschicht unmittelbar neben der Heizschicht angeordnet. Hierdurch kann eine elektrische und thermische Isolierung der Heizschicht auf der vom Aufnahmebereich für Lebensmittel abgewandten Seite der Heizschicht erreicht werden. Wenn eine Oberfläche der Isolationsschicht eine Standfläche des Gargeschirrs bildet, können Material und Kosten eingespart werden. Dadurch, dass ein Wärmestrom in Richtung einer Kochfeldplatte eines Induktionskochfelds vermieden werden kann, kann eine Kühleinheit, insbesondere eine Elektronikkühleinheit, des Induktionskochfelds kostengünstiger ausgeführt werden. Insbesondere können kostengünstigere und/oder weniger temperaturbeständige Komponenten verwendet werden und es kann vorzugsweise auf eine Lüftereinheit verzichtet werden. Des Weiteren kann eine Erwärmung der Kochfeldplatte vermieden werden, wodurch eine Bediensicherheit vorteilhaft gesteigert werden kann.

Vorteilhaft weist die Isolationsschicht eine Dicke von höchstens 4 mm, insbesondere von maximal 3 mm, vorteilhaft von höchstens 2 mm und besonders vorteilhaft von maximal 1 mm auf. Hierdurch kann sichergestellt werden, dass ein magnetischer Fluss an der Heizschicht ausreichend groß ist. Vorteilhaft weist die Isolationsschicht eine Dicke von zumindest 1 mm auf. Hierdurch kann ein besonders energieeffizienter Kompromiss zwischen einer vorteilhaft stärkeren Wärmeisolierung sowie einer unvorteilhaft stärkeren Abschwächung des magnetischen Flusses an der Heizschicht bei großer Dicke und einer unvorteilhaft schwächeren Wärmeisolierung sowie einer vorteilhaft geringeren Abschwächung des magnetischen Flusses an der Heizschicht bei kleiner Dicke erzielt werden.

Ferner wird ein Gargeschirr, insbesondere zur Erwärmung auf einem Induktionskochfeld, mit einem erfindungsgemäßen Gargeschirrboden vorgeschlagen. Vorteilhaft umfasst das Gargeschirr zumindest eine metallische Seitenwand, die einen Aufnahmebereich für Lebensmittel in radialer Richtung begrenzt. Hierdurch kann ein Herstellungsprozess des Gargeschirrs vorteilhaft vereinfacht werden.

Weitere Vorteile ergeben sich aus den folgenden Zeichnungsbeschreibungen. In den Zeichnungen ist ein Ausführungsbeispiel der Erfindung dargestellt. Die Zeichnungen, die Beschreibungen und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittdarstellung eines Gargeschirrs mit einem Gargeschirrboden, welcher ein Schichtsystem aufweist,
- Fig. 2: das Gargeschirr mit dem Gargeschirrboden in einer Schnittdarstellung entlang einer Linie II-II in Fig. 1.

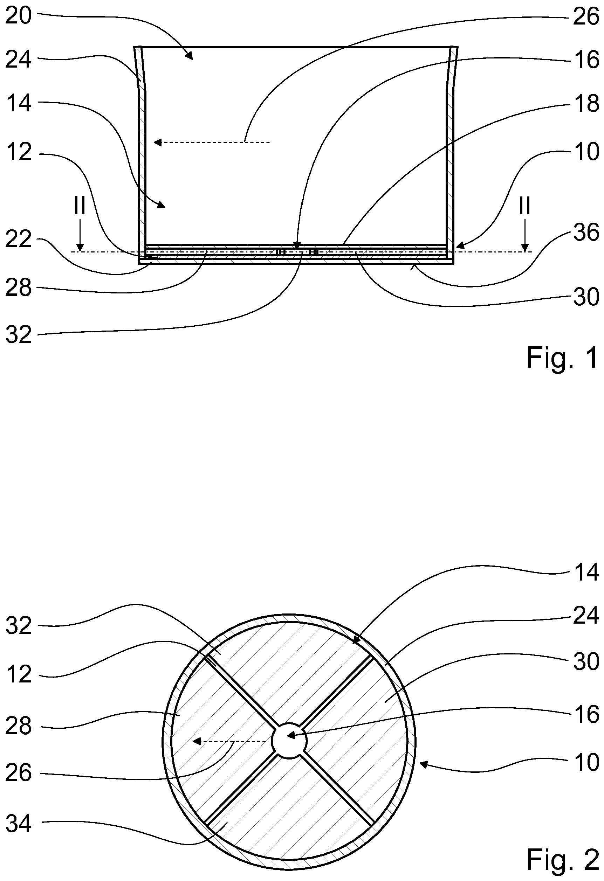

Fig. 1 zeigt in einer nicht maßstabsgetreuen Schnittdarstellung ein Gargeschirr für ein Induktionskochfeld mit einer metallischen Seitenwand 24 und einem erfindungsgemäßen Gargeschirrboden, welche einen Aufnahmebereich 20 für Lebensmittel nach unten und in radialer Richtung 26 begrenzen. Der Gargeschirrboden ist als Schichtsystem 10 ausgeführt, welches eine Wärmeleitschicht 18, eine Magnetschicht 14, eine Heizschicht 12 und eine Isolationsschicht 22 umfasst.

Die Wärmeleitschicht 18 besteht aus einer Aluminiumplatte. Die Wärmeleitschicht 18 begrenzt den Aufnahmebereich 20 unmittelbar nach unten. Die Aluminiumplatte weist eine Wärmeleitfähigkeit von ungefähr 235 W/m/K auf. Die Wärmeleitschicht 18 weist eine Dicke von 1 mm auf. Auf einer vom Aufnahmebereich 20 abgewandten Seite der Wärmeleitschicht 18 folgt auf die Wärmeleitschicht 18 unmittelbar die Magnetschicht 14.

Die Magnetschicht 14 ist, wie in Fig. 2 gezeigt, aus vier nahezu viertelkreisscheibenförmigen Ferritelementen 28, 30, 32, 34 aufgebaut. Diese sind zu einer Kreisscheibe zusammengefügt, wobei in einem Mittelbereich der Kreisscheibe eine kreisscheibenförmige Materialausnehmung 16 verbleibt. Die Magnetschicht 14 weist eine Dicke von 3 mm auf. Die Ferritelemente 28, 30, 32, 34 weisen eine Permeabilitätszahl µᵣ von ungefähr 7500 auf. Die Ferritelemente 28, 30, 32, 34 weisen eine elektrische Leitfähigkeit von ungefähr 10⁻⁴ S/m auf. Auf einer vom Aufnahmebereich 20 abgewandten Seite der Magnetschicht 14 folgt auf die Magnetschicht 14 unmittelbar die Heizschicht 12.

Die Heizschicht 12 besteht aus einer Aluminiumplatte mit einer Dicke von 12 µm. Die Heizschicht 12 weist eine elektrische Leitfähigkeit von ungefähr 3,7×10⁷ S/m auf. Die Heizschicht 12 weist eine Wärmeleitfähigkeit von etwa 235 W/m/K auf. Auf einer vom Aufnahmebereich 20 abgewandten Seite der Heizschicht 12 folgt auf die Heizschicht 12 unmittelbar die Isolationsschicht 22.

Die Isolationsschicht 22 besteht aus einem PBT Kunststoff und weist eine Dicke von 2 mm auf. Die Isolationsschicht 22 weist eine Wärmeleitfähigkeit von etwa 0,25 W/m/K auf. Die Isolationsschicht 22 weist eine elektrische Leitfähigkeit von ungefähr 10⁻¹¹ S/m auf. Die Isolationsschicht 22 bildet eine Standfläche 36 für das Gargeschirr.

Bei einem Betrieb des Gargeschirrs auf einer Heizzone einer Kochfeldplatte des Induktionskochfelds wird durch eine der Heizzone zugeordnete Induktorspule ein hochfrequentes magnetisches Wechselfeld erzeugt, welches das Schichtsystem 10 des Gargeschirrbodens durchdringt. Durch die Magnetschicht 14 wird eine magnetische Flussdichte, die die Heizschicht 12 durchdringt, vorteilhaft erhöht, so dass Wirbelstromverluste in der Heizschicht 12 erheblich verstärkt werden können. Des Weiteren wird das magnetische Wechselfeld durch die Magnetschicht 14 nach oben hin abgeschirmt. Durch die Wirbelströme kann die Heizschicht 12 bis auf Temperaturen von 200°C erhitzt werden. Die Heizschicht 12 gibt die Wärme über die Magnetschicht 14 und die Wärmeleitschicht 18 an den Aufnahmebereich 20 für Lebensmittel ab. Die Isolationsschicht 22 sorgt für eine elektrische Isolierung und für eine Wärmeisolierung gegenüber der Kochfeldplatte des Induktionskochfelds. Hierdurch kann eine Erwärmung der Kochfeldplatte vermieden werden, wodurch eine besonders hohe Energieeffizienz erreicht werden kann. Des Weiteren kann eine Elektronikeinheit des Induktionskochfelds vor Überhitzung geschützt werden. Gegenüber einem herkömmlichen rein ferromagnetischen Gargeschirr kann eine Verringerung von relativen Leistungsverlusten in der Elektronikeinheit und der Induktorspule um jeweils zumindest 2% erreicht werden. Des Weiteren kann durch die Isolationsschicht 22 die Energieeffizienz um weitere 2% gesteigert werden.

Zusätzlich kann die Wärmeleitschicht 18 einen Fortsatz aufweisen, der in die Materialausnehmung 16 der Magnetschicht 14 eingreift und vorzugsweise mit der Heizschicht 12 in Berührung steht. Hierdurch kann eine vorteilhafte Erhöhung eines Wärmestroms von der Heizschicht 12 zum Aufnahmebereich 20 für Lebensmittel erreicht werden. In weiteren alternativen Ausführungen kann auch auf eine Wärmeleitschicht und/oder eine Isolationsschicht verzichtet werden, um dadurch ein kostengünstigeres Produkt bereitzustellen.

### Bezugszeichen

- 10: Schichtsystem
- 12: Heizschicht
- 14: Magnetschicht
- 16: Materialausnehmung
- 18: Wärmeleitschicht
- 20: Aufnahmebereich
- 22: Isolationsschicht
- 24: Seitenwand
- 26: Richtung
- 28: Ferritelement
- 30: Ferritelement
- 32: Ferritelement
- 34: Ferritelement
- 36: Standfläche

## Patentansprüche

1. Gargeschirrboden mit einem Schichtsystem (10), das zumindest eine Heizschicht (12) mit einer elektrischen Leitfähigkeit von wenigstens 10⁴ S/m umfasst, wobei die Heizschicht (12) dazu vorgesehen ist, mittels eines Wirbelstromflusses erwärmt zu werden, wobei eine Dicke der Heizschicht zwischen 5 µm und 20 µm liegt, **dadurch gekennzeichnet, dass** das Schichtsystem (10) zumindest eine Magnetschicht (14) mit einer Permeabilitätszahl von wenigstens 10 umfasst, wobei die Magnetschicht (14) segmentiert ist und/oder zumindest eine Materialausnehmung (16) aufweist.

2. Gargeschirrboden nach Anspruch 1, **dadurch gekennzeichnet, dass** die Heizschicht (12) zumindest ein Material mit einer Wärmeleitfähigkeit von wenigstens 15 W/m/K umfasst.

3. Gargeschirrboden nach Anspruch 1 oder 2, **dadurch gekennzeichnet, dass** die Magnetschicht (14) zumindest in einem Teilbereich eine elektrische Leitfähigkeit von höchstens 1 S/m aufweist.

4. Gargeschirrboden nach einem der vorhergehenden Ansprüche, **dadurch gekennzeichnet, dass** die Magnetschicht (14) unmittelbar neben der Heizschicht (12) angeordnet ist.

5. Gargeschirrboden nach einem der vorhergehenden Ansprüche, **dadurch gekennzeichnet, dass** die Magnetschicht (14) eine Dicke zwischen 10 µm und 4 mm aufweist.

6. Gargeschirrboden nach einem der vorhergehenden Ansprüche, **dadurch gekennzeichnet, dass** das Schichtsystem (10) neben der Heizschicht (12) zumindest eine Wärmeleitschicht (18) mit einer Wärmeleitfähigkeit von wenigstens 15 W/m/K umfasst.

7. Gargeschirrboden nach Anspruch 6, **dadurch gekennzeichnet, dass** die Wärmeleitschicht (18) auf einer einem Aufnahmebereich (20) für Lebensmittel zugewanden Seite der Heizschicht (12) angeordnet ist.

8. Gargeschirrboden nach einem der vorhergehenden Ansprüche, **dadurch gekennzeichnet, dass** das Schichtsystem (10) wenigstens eine Isolationsschicht (22) mit einer Wärmeleitfähigkeit von höchstens 5 W/m/K umfasst.

9. Gargeschirrboden nach Anspruch 8, **dadurch gekennzeichnet, dass** die Isolationsschicht (22) eine elektrische Leitfähigkeit von höchstens 10⁻⁴ S/m umfasst.

10. Gargeschirrboden nach Anspruch 8 oder 9, **dadurch gekennzeichnet, dass** die Isolationsschicht (22) auf einer einem Aufnahmebereich (20) für Lebensmittel abgewandten Seite der Heizschicht (12) angeordnet ist.

11. Gargeschirrboden nach einem der Ansprüche 8 bis 10, **dadurch gekennzeichnet, dass** die Isolationsschicht (22) eine Dicke von höchstens 4 mm aufweist.

12. Gargeschirr, insbesondere zur Erwärmung auf einem Induktionskochfeld, mit einem Gargeschirrboden nach einem der vorhergehenden Ansprüche.

13. Gargeschirr nach Anspruch 12, **gekennzeichnet durch** zumindest eine metallische Seitenwand (24), die einen Aufnahmebereich (20) für Lebensmittel in radialer Richtung (26) begrenzt.

## Claims

1. Cooking vessel bottom with a layer system (10) which comprises at least one heating layer (12) having an electrical conductivity of at least 10⁴ S/m, wherein the heating layer (12) is intended to be heated by means of an eddy-current flow, wherein a thickness of the heating layer lies between 5 µm and 20 µm, **characterised in that** the layer system (10) comprises at least one magnetic layer (14) having a relative permeability of at least 10, wherein the magnetic layer (14) is segmented and/or has at least one material recess (16).

2. Cooking vessel bottom according to claim 1, **characterised in that** the heating layer (12) comprises at least one material having a heat conductivity of at least 15 W/m/K.

3. Cooking vessel bottom according to claim 1 or 2, **characterised in that** at least in a partial region the magnetic layer (14) has an electrical conductivity of at most 1 S/m.

4. Cooking vessel bottom according to one of the preceding claims, **characterised in that** the magnetic layer (14) is arranged immediately next to the heating layer (12).

5. Cooking vessel bottom according to one of the preceding claims, **characterised in that** the magnetic layer (14) has a thickness between 10 µm and 4 mm.

6. Cooking vessel bottom according to one of the preceding claims, **characterised in that** in addition to the heating layer (12) the layer system (10) comprises at least one heat conducting layer (18) having a heat conductivity of at least 15 W/m/K.

7. Cooking vessel bottom according to claim 6, **characterised in that** the heat conducting layer (18) is arranged on that side of the heating layer (12) which faces towards a receiving region (20) for food.

8. Cooking vessel bottom according to one of the preceding claims, **characterised in that** the layer system (10) comprises at least one insulating layer (22) having a heat conductivity of at most 5 W/m/K.

9. Cooking vessel bottom according to claim 8, **characterised in that** the insulating layer (22) has an electrical conductivity of at most 10⁻⁴ S/m.

10. Cooking vessel bottom according to claim 8 or 9, **characterised in that** the insulating layer (22) is arranged on that side of the heating layer (12) which faces away from a receiving region (20) for food.

11. Cooking vessel bottom according to one of the claims 8 to 10, **characterised in that** the insulating layer (22) has a thickness of at most 4 mm.

12. Cooking vessel, in particular for heating on an induction hob, with a cooking vessel bottom according to one of the preceding claims.

13. Cooking vessel according to claim 12, **characterised by** at least one metallic side wall (24) which delimits a receiving region (20) for food in a radial direction (26).

## Revendications

1. Fond de récipient culinaire avec un système de couches (10) qui comprend au moins une couche chauffante (12) ayant une conductivité électrique d'au moins 10⁴ S/m, dans lequel la couche chauffante (12) est prévue pour être chauffée au moyen d'un flux de courant de Foucault, dans lequel une épaisseur de la couche chauffante se situe entre 5 µm et 20 µm, **caractérisé en ce que** le système de couches (10) comprend au moins une couche magnétique (14) ayant un indice de perméabilité d'au moins 10, dans lequel la couche magnétique (14) est segmentée et/ou présente au moins une exclusion de matériau (16).

2. Fond de récipient culinaire selon la revendication 1, **caractérisé en ce que** la couche chauffante (12) comprend au moins un matériau ayant une conductivité thermique d'au moins 15 W/m/K.

3. Fond de récipient culinaire selon la revendication 1 ou 2, **caractérisé en ce que** la couche magnétique (14) présente au moins une conductivité électrique d'au plus 1 S/m dans une zone spécifique.

4. Fond de récipient culinaire selon l'une des revendications précédentes, **caractérisé en ce que** la couche magnétique (14) est disposée directement à côté de la couche chauffante (12).

5. Fond de récipient culinaire selon l'une des revendications précédentes, **caractérisé en ce que** la couche magnétique (14) présente une épaisseur comprise entre 10 µm et 4 mm.

6. Fond de récipient culinaire selon l'une des revendications précédentes, **caractérisé en ce que** le système de couches (10) comprend à côté de la couche chauffante (12) au moins une couche conductrice de chaleur (18) ayant une conductivité thermique d'au moins 15 W/m/K.

7. Fond de récipient culinaire selon la revendication 6, **caractérisé en ce que** la couche conductrice de chaleur (18) est disposée sur un côté de la couche chauffante (12) qui est tourné vers une zone de réception (20) destinée à des aliments.

8. Fond de récipient culinaire selon l'une des revendications précédentes, **caractérisé en ce que** le système de couches (10) comprend au moins une couche d'isolation (22) ayant une conductivité thermique d'au plus 5 W/m/K.

9. Fond de récipient culinaire selon la revendication 8, **caractérisé en ce que** la couche d'isolation (22) comprend une conductivité électrique d'au plus 10⁻⁴ S/m.

10. Fond de récipient culinaire selon la revendication 8 ou 9, **caractérisé en ce que** la couche d'isolation (22) est disposée sur un côté de la couche chauffante (12) qui est opposé à une zone de réception (20) destinée à des aliments.

11. Fond de récipient culinaire selon l'une des revendications 8 à 10, **caractérisé en ce que** la couche d'isolation (22) présente une épaisseur d'au plus 4 mm.

12. Récipient culinaire, destiné en particulier à un réchauffement sur une plaque de cuisson à induction, ayant un fond de récipient culinaire selon l'une des revendications précédentes.

13. Récipient culinaire selon la revendication 12, **caractérisé par** au moins une paroi latérale métallique (24) qui délimite une zone de réception (20) destinée à des aliments dans une direction radiale (26).
